Europäisches Patentamt

European Patent Office

Office européen des brevets

(11) Publication number: **0 111 006**
**B1**

(12) **EUROPEAN PATENT SPECIFICATION**

(45) Date of publication of patent specification: **11.05.88**

(21) Application number: **83901635.9**

(22) Date of filing: **31.05.83**

(86) International application number:
**PCT/JP83/00172**

(87) International publication number:
**WO 83/04331 08.12.83 Gazette 83/28**

(51) Int. Cl.⁴: **G 11 B 7/08**

(54) **OPTICAL HEAD CONTROL SIGNAL GENERATOR.**

(30) Priority: **31.05.82 JP 92383/82**

(43) Date of publication of application:
**20.06.84 Bulletin 84/25**

(45) Publication of the grant of the patent:
**11.05.88 Bulletin 88/19**

(84) Designated Contracting States:
**AT DE FR GB SE**

(56) References cited:
**EP-A-0 050 967**
**EP-A-0 068 904**
**FR-A-2 497 379**
**JP-A-93 000 222**
**US-A-3 913 076**

**PATENTS ABSTRACTS OF JAPAN, vol. 7, no. 188 (P-217)(1333), August 17, 1983, & JP - A - 58 88 842 (RICOH K.K.)(27-05-1983).**

(73) Proprietor: **SONY CORPORATION**
**7-35 Kitashinagawa 6-Chome Shinagawa-ku Tokyo 141 (JP)**

(72) Inventor: **SUGIKI, Mikio Sony Corporation**
**7-35, Kitashinagawa 6-chome Shinagawa-ku Tokyo 141 (JP)**

(74) Representative: **Thomas, Christopher Hugo et al**
**D Young & Co 10 Staple Inn London WC1V 7RD (GB)**

Courier Press, Leamington Spa, England.

## Description

This invention relates to optical head control signal generators. Such generators are suitable for generating a tracking error signal to control an optical head employed in an optical information reproducing apparatus for optically reproducing with a beam of light, information recorded on a recording medium.

There is known a reproducing system for playing back a disc-shaped recording medium having information recording tracks in which information signals such as video signals and audio signals are recorded as a series of pits. In this reproducing system, the tracks on the recording medium are scanned by a beam of light such as a laser beam, and variations in the reflected light beam are detected to reproduce the recorded information signals. Such a system may, for example, be a video disc system or a digital audio disc system. A reproducing apparatus for such a system requires automatic control modes respectively for enabling the light beam to impinge on the tracks accurately at all times, and for focusing the light beam correctly on the tracks while scanning the tracks with the light beam. The automatic control modes for causing the light beam to impinge exactly on the tracks and for focusing the light beam correctly on the tracks are called tracking control and focusing control, respectively, and are indispensable in the optical information reproducing apparatus of the type described.

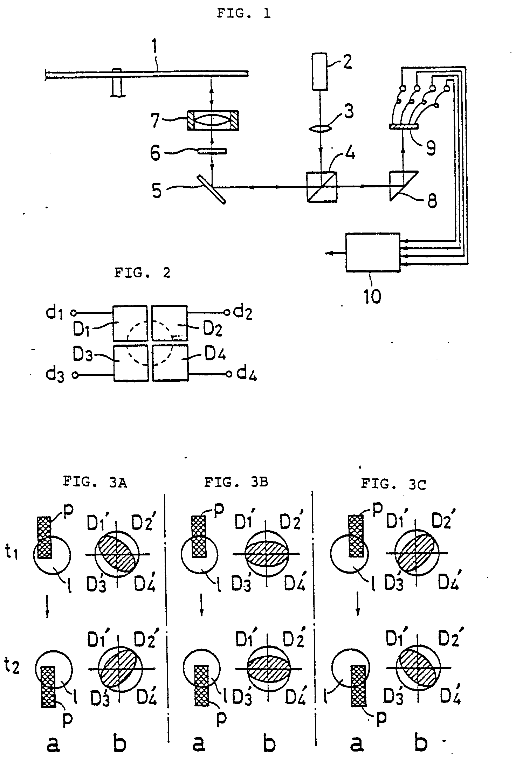

These control modes are normally achieved by causing the light beam to pass through an optical head onto the recording medium, receiving the light beam as modulated by the recording medium with the optical head, supplying the received light beam to a photosensitive element, generating control signals indicative of conditions in which the light beam reaches and is focused on the tracks based on a detected output from the photosensitive element, and driving optical means such as a lens or a mirror forming the optical head with the control signals for positional control. Figure 1 of the accompanying drawings illustrates, by way of example, an optical arrangement for an optical head control signal generator for supplying control signals to such a control device for an optical head. A disc-shaped recording medium 1 carries information recording tracks composed of a series of pits. A laser beam emitted from a laser source 2 enters a polarizing prism 4 through a collimator lens 3. The laser beam directed to the left from the polarizing prism 4 reaches an objective lens 7 by way of a mirror 5 and a quarter-wave plate 6. The laser beam is then focused by the objective lens 7 onto the recording medium 1. The objective lens 7 is able to be driven for being positionally controlled, for example, in a direction traverse to the tracks and a direction towards or away from the recording medium 1. The laser beams falling on the recording medium 1 is modulated by the tracks, reflected back into the objective lens 7, and the travels via the quarter-wave plate 6, the mirror 5, the polarizing prism 4, and a prism 8 before reaching a photosensitive unit 9. The reflected light beam, or reading light beam, as modulated by the recording medium and supplied from the objective lens 7 forming an optical head is detected by photosensitive elements of the photosensitive unit 9. Variations in the detected light beam are sensed by the photosensitive unit 9, the output signal from which is supplied to a control signal generating circuit 10 which generates a control signal to drive, for example, the objective lens 7 for positional control such as tracking control or focusing control. The photosensitive unit 9 comprises four photosensitive elements D1, D2, D3 and D4, for example, as illustrated in Figure 2 of the accompanying drawings. The reading light beam as modulated by the recording medium 1 and guided by the objective lens 7 forms a spot on the photosensitive elements D1 to D4 as indicated by the dotted lines in Figure 2. The photosensitive elements D1 to D4 produce outputs dependent on beam spot portions respectively formed thereon, the outputs being available at respective output terminals d1 to d4.

The tracking control will now be considered. The information recording medium 1 comprise a series of pits having a depth which is one-quarter of the wavelength $\lambda$ of the incident laser beam. The laser beam irradiating the tracks is diffracted and reflected by the pits. The reading light beam is modulated by the recording medium 1, reflected back through the objective lens 7, and reaches the photosensitive unit 9 to form the spot on the photosensitve elements D1 to D4. The reading light beam then produces a diffraction pattern corresponding to the positional relationship between one of the pits and the laser beam spot irradiating the pit. Figures 3A, 3B and 3C of the accompanying drawings illustrate the manner in which the foregoing process takes place. In figures 3A, 3B and 3C the reference letter a designates the positional relationship between a pit p and a laser beam spot l irradiating the pit p, and the reference letter b designates a diffraction pattern (hatched) formed on the exit pupil surface of the objective lens 7 by the reading light beam dependent on each of the above positional relationships. Four quarters D1', D2', D3' and D4' shown at b indicate portions in which the amounts of light are detected by the four photosensitive elements D1, D2, D3 and D4 respectively. The pit p moves from the position t1 to the position t2 with respect to the laser beam spot l. Figure 3A shows the condition in which the laster beam spot l is displaced to the right from the pit p. Figure 3B illustrates the condition in which the laser beam spot l is positioned centrally on the pit p, that is, the correct tracking condition. Figure 3C shows the condition in which the laser beam spot l is displaced to the left from the pit p.

It is understood from Figure 3 that when the laser beam spot l is centrally positioned on the pit p, that is, when in the correct tracking conditon, a diffraction pattern is obtained in which the amounts of light are completely symmetrically distributed between the four quarters D1' to D4', and when the laser beam spot l is positionally displaced to the right or left from the pit p, there is produced a diffraction pattern in which an unsymmetrical distribution of the amounts of light is obtained between the four quarters D1' to D4', with the light distribution being out of symmetry in reverse patterns when the laser beam spot is displaced to the right and left. Based on the foregoing, outputs from the photosenstive elements D1 to D4 may be supplied to and processed by a given control signal generator for producing a control signal, that is, a tracking control signal which varies dependent on the positional relationship of the laser beam spot l with respect to the pit p. The resulting tracking control signal is used to drive the objective lens 7 for positional control to maintain the correct condition shown in Figure 3B.

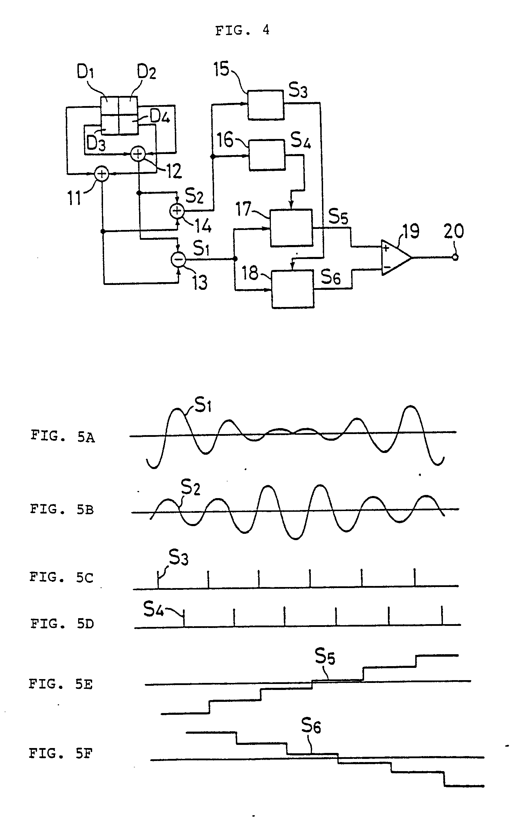

Figure 4 of the accompanying drawings shows one example of the control signal generating circuit (generator) 10 which produces a tracking control signal from the outputs of the photosensitive elements D1 to D4, and Figure 5 of the accompanying drawings shows corresponding waveforms. In the control signal generator 10, the outputs from the photosensitive elements D1 to D4 are added by an adder 11, and the outputs from the photosensitive elements D2 and D3 are added by an adder 12. A subtractor 13 produces the difference between outputs from the adders 11 and 12, and an adder 14 adds the outputs from the adders 11 and 12.

When a laser beam spot moves, for example, from right to left across a track composed of a series of pits, the substactor 13 produces an output signal S1, as shown in Figure 5A, and the adder 14 produces an output signal S2 as shown in Figure 5B. The signal S1 comprises a signal having a frequency band of the recorded information signal and varying each time the laser beam spot passes through a pit, the signal serving as a tracking error signal having positional information indicative of which position the laser beam spot is in with respect to the track. The signal S2 serves as a reproduced information signal. The output from the adder 14 is supplied to a pulse generator 15 which produces a pulse output signal S3 in response to rising edges of the signal S2 as shown in Figure 5C. The output from the adder 14 is also supplied to a pulse generator 16 which produces a pulse output signal S4 in response to falling edges of the signal S2 as shown in Figure SD. The subtractor 13 supplies the output to two sampling-hold circuits 17 and 18.

The sampling-hold circuit 17 supplies an output signal S5, as shown in Figure 5E, which results from sampling and hold performed in response to the pulse signal S4. The output signals S5 and S6 from the sampling-hold circuits 17 and 18 have a polarity changing from negative to positive or vice versa when the laser beam spot is moved from right to left across a track, and have a level representative of the deviation of the laser beam spot from the centre of the track. Therefore, the output signals S5 and S6 can be employed as tracking control signals. The output signals S5 and S6 are supplied to a differential circuit 19 which produces the difference between the supplied signals, the difference serving as a more reliable tracking control signal supplied to an output terminal 20 which is then supplied for example to a driver circuit for driving the objective lens 7.

(A similar control arrangement is disclosed in European patent specification EP—A1— 0 050 967.)

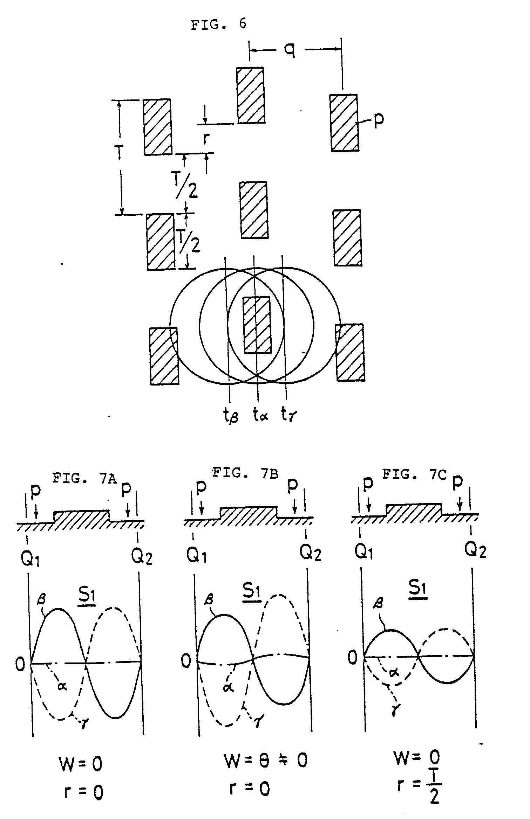

The tracking control signal thus produced is affected by a tilt of the surface of the disc-shaped recording medium (hereinafter referred to as a "recording medium tilt") on which information recording tracks are formed, with respect to the plane lying perpendicular to the optical axis of the incident laser beam, and also by the positional relationship between pits forming one track and pits forming an adjacent track (hereinafter referred to as a "pit arrangement") in the direction along the information recording tracks. The tracking control signal is caused to vary dependent on the recording medium tilt and the pit arrangement. For example, as shown in Figure 6 of the accompanying drawings, a disc-shaped recording medium has information recording tracks composed of rectangular pits p recorded at a constant recording signal wavelength T and each having a length of T/2, the pits p being spaced at an interval of T/2. The tracks are spaced at a track pitch g with the pit arrangement having a phase difference of r. When a laser beam emitted from the optical system shown in Figure 1 falls on the recording medium thus constructed, and the control signal generating circuit shown in Figure 4 produces a tracking control signal, a tracking error signal, that is, the signal S1 from the subtractor 13 is obtained as illustrated in Figures 7A, 7B and 7C of the accompanying drawings.

Figures 7A, 7B and 7C illustrate a tracking error signal S1 produced when the centre of the laser beam spot moves from the centre Q1 of one of the pits p forming one track to the centre Q2 of one of the pits p forming an adjacent track. In the correct tracking condition in which the centre of the laser beam spot moves along a track centre line tα as shown in Figure 6, the tracking error signal S1 is of a waveform as shown by a dot-and-dash line α. When the centre of the laser beam spot is displaced to the left from the track centre line tα and moves along a line tβ as shown in Figure 6, resulting in a tracking error, the tracking error signal S1 has a waveform as shown by a solid line β. When the centre of the laser beam spot is displaced to the right from the track centre line tα and moves along a line tγ at the same distance from the track centre line tα as the line tβ, resulting in a tracking error, the tracking error S1 has a waveform as shown by a broken line γ. In

Figure 7A, a recording medium tilt W is zero, and the phase difference r of the pit arrangement is zero. In Figure 7B, the recording medium tilt W is not zero but is θ (for example, one degree), and the phase difference r of the pit arrangement is zero. In Figure 7C, the recording medium tilt W is zero, and the phase difference r of the pit arrangement is T/2. As is understood from the above, when the recording medium tilt W and the phase difference r are both zero, the signal pattern α is zero with the signal patterns β and γ are of equal amplitude and opposite phases. When the recording medium tilt W is θ, the signal pattern α is not zero, with the signal pattern β being of a smaller amplitude than when W and r are zero, and the signal pattern γ being of a larger amplitude than when W and r are zero, resulting in an unbalanced condition. When the phase difference r is T/2, the signal pattern α is zero and the signal patterns β and γ are of equal amplitude and opposite phases, but are smaller in amplitude than when W and r are zero.

Thus, the tracking error signal S1 is affected by the recording medium tilt W and the pit arrangement r, thereby to produce amplitude variations. Any tracking control signal generated on the basis of such a tracking error signal S1 contains an error and fails to perform correct tracking control.

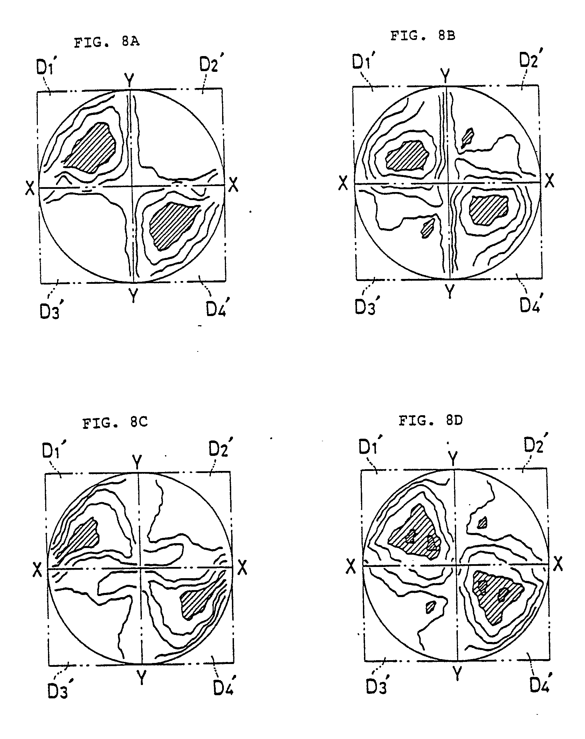

When a laser beam emitted from the optical system shown in Figure 1 falls on a disc-shaped recording medium having information recording tracks composed of a series of pits p as shown in Figure 6, a laser beam as modulated by the recording medium is received as a reading light beam by the optical arrangement of Figure 1. A diffraction pattern produced by the reading light beam on the exit pupil surface of the objective lens 7 will now be studied in detail. When the centre of the laser beam on the recording medium is spaced T/4 from the centre of one pit p in a direction along the information recording track and also spaced q/4 from the centre of the same pit in a direction across the information recording track, thus producing a tracking error of q/4, the diffraction patterns are generated as schematically shown in Figure 8 of the accompanying drawings.

The diffraction patterns (enclosed in circles) shown in Figures 8A to 8D have hatched peak portions with surrounding lines serving as diagrams indicating equal levels. Four quarters D1' to D4' indicated by the two-dot-and-dash lines in Figures 8A to 8D correspond respectively to four photosensitive elements forming a photosensitive unit, for example, portions in which amounts of incident light are detected by the photosensitive elements D1 to D4. Figure 8A shows a diffraction pattern produced when the recording medium tilt W is zero and the phase difference r of the pit arrangement is also zero. The diffraction pattern of Figure 8B is produced when W is θ (for example, one degree) and r is zero. Figure 8C illustrates a diffraction pattern produced when W is zero and r is T/2. Figure 8D shows a diffraction pattern produced when W is θ (for example, one degree) and r is T/2.

It can be seen from the foregoing that when there is a recording medium tilt, the diffraction pattern on the exit pupil surface of the objective lens 7 is varied due to coma aberration produced by the recording medium tilt, and when there is a phase difference of the pit arrangement, the diffraction pattern is also varied due to the phase difference. Since the four quarters D1' to D4' shown in Figures 8A to 8D correspond respectively to the portions in which the amounts of light are detected by the four photosensitive elements D1 to D4, respectively, the difference between the light distribution on the diagonal portions D1' to D4', and the light distribution on the diagonal portions D2' and D3' contributes to the amplitude of the tracking error signals signals S1 produced as the output from the subtractor 13. A light distributon component that is symmetrical with respect to a line X—X, and a light distribution component that is symmetrical with respect to a line Y—Y serve to reduce the amplitude of the tracking error signal S1.

Now attention is directed to central portions of the diffraction patterns shown in Figures 8A to 8D. Except for the diffraction pattern of Figure 8A, the diffraction patterns shown in Figures 8B to 8D are distinctly generated, which tends to increase a light distribution component symmetrical with respect to the line X—X or the line Y—Y. Accordingly, the light distribution component in each of the diffraction patterns of Figures 8B to 8D which reduces the amplitude of the tracking error signal S1 is substantially increased as compared with that in the diffraction pattern of Figure 8A. Attention is also drawn to the outer peripheries of the diffraction patterns of Figures 8A to 8D. The difference between the amounts of light on the diagonal portions D1' and D4' is equal to the difference between the amounts of light on the diagonal portions D2' and D3', and a light distribution component which is symmetrical with respect to the line X—X or the line Y—Y is small. Therefore, light distribution components which vary the amplitude of the tracking error signal S1 therebetween are small in the respective diffraction patterns of Figures 8A to 8D.

As a consequence, any influence due to a recording medium tilt and a pit arrangement can be reduced by detecting the amount of light only in the outer peripheral portion of the diffraction pattern on the exit pupil surface of the objective lens 7 as shown in Figures 8A to 8D, thereby to generate a tracking error signal.

According to the present invention there is provided an optical head control signal generator comprising:

a lens disposed in a optical path of a reading light beam which is caused by an optical head to be incident upon a recording medium and modulated by the recording medium;

four photosensitive elements disposed repectively in first, second, third and fourth quadrants divided by two perpendicular straight lines and responseive to the reading light beam for producing detected outputs based on a diffraction pattern formed on an exit pupil surface of said lens by the reading light beam; and

a synthesizing circuit for producing a first sum output by adding the detected outputs from the two of said photosensitive elements located in said first and third quadrants and a second sum output by adding the detected outputs from the two of said photosensensitive elements located in said second and fourth quadrants, and for generating a tracking error signal for controlling said optical head on the basis of sum and difference signal indicative of the sum of and the difference between said first and second sum signals; characterised in that:

said detected outputs from said four photosensitive elements are based only on an outer peripheral portion of said diffraction pattern.

European patent specification EP—A1—0 068 904 (published 5 January 1983 and relevant under EPC Articles 54(3) and 56) discloses in a somewhat similar generator, but used in a focus control system, four photosensitive elements only responsive to light on an outer peripheral portion of the quadrants.

Thus, based on the results of the foregoing study, an embodiment of optical head control signal generator according to the present invention has an oppical arrangement similar to that shown in Figure 1 with the photosensitive unit arranged for detecting the amount of light only in the outer peripheral portion of a diffraction pattern formed on the exit pupil surface of the objective lens by a reading light beam. A tracking error signal is generated in response to an output signal from the photosensitive unit based on the detected quantity of light only in the outer peripheral portion of the diffraction pattern, and an optical head control signal is produced from the tracking error thus generated.

With such an embodiment, an accurate tracking control signal can be produced on the basis of a tracking error signal which is subjected to greatly reduced adverse influences to recording medium tilt and the bit arrangement. The invention will now be described by way of example with reference to the accompanying drawings, throughout which like parts are referred to be like references and in which:

Figure 1 is a schematic view illustrative of an optical arrangement used in a previously proposed optical head control signal generator;

Figure 2 is a schematic view of a photosensitive unit employed in such a previously proposed optical head control signal generator;

Figures 3A to 3C are a set of diagrams used for explaining the positonal relationship between a pit in an information recording track on a recording medium and a spot of incident light;

Figure 4 is a block diagram of a control signal generating circuit including the photosensitive unit in the previously proposed optical head control signal generator;

Figures 5A to 5F are a set of waveform diagrams used for explaining the operation of the circuit shown in Figure 4;

Figures 6 and 7A to 7C are illustrations used for explaining the operation of the previously proposed optical head control signal generator;

Figures 8A to 8D are a set of diagram showing varying diffraction patterns on the surface of an objective lens in the optical system of Figure 1;

Figure 9 is a schematic view of a photosensitive unit employed in an embodiment of optical head control signal generator according to the present invention; and

Figure 10 is a block diagram of a control signal generating circuit including the photosensitive unit in the embodiment.

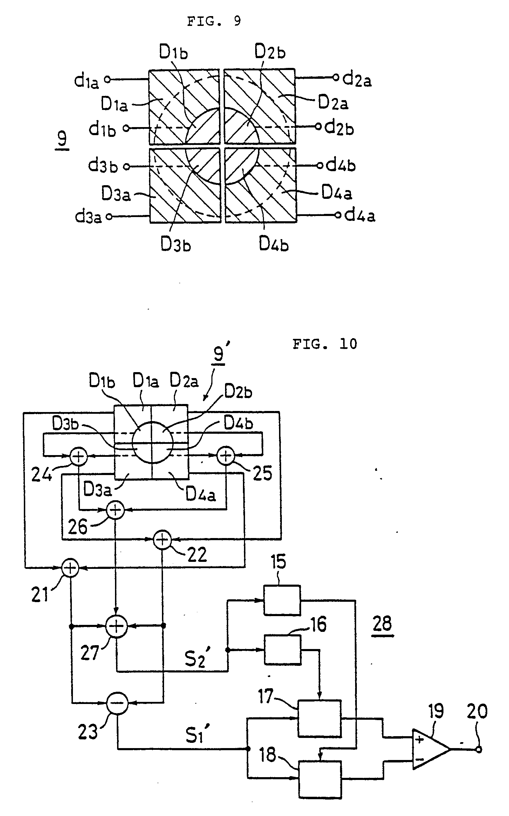

An embodiment of optical head control signal generator according to the present invention has an optical arrangement as illustrated in Figure 1, except for the photosensitive unit. As shown in Figure 9, a photosensitive unit 9' has four photsensitive elements D1a, D2a, D3a and D4a for detecting amounts of light in the outer circumferential peripheral portion of a diffraction pattern on the exit pupil surface of the objective lens 7, and four photosensitive elements D1b, D2b, D3b, and D4b for detecting amounts of light in a central portion of the diffraction pattern on the exit pupil surface of the objective lens 7. The photosensitive elements D1a and D1b, D2a and D2b, D3a and D3b, and D4a and D4b correspond respectively to the photosensitive elements D1, D2, D3 and D4 shown in Figure 2. Output terminals d1a, d2a, d3a and d4a are connected to the photosensitive elements D1a, D2a, D3a and D4a, respectively, and output terminals d1b, d2b, d3b and d4b are connected to the photosensitive elements D1b, D2b, D3b, and D4b, respectively.

Figure 10 shows a control signal generating circuit including the photosensitive unit 9' composed of the eight photosensitive elements D1a to D4a and D1b to D4b. Outputs from the photosensitive elements D1 and D4a are added by an adder 21, and outputs from the photosensitive elements D2a and D3a are added by the adder 22. A subtractor 23 produces the difference between outputs from the adders 21 and 22. Outputs from the photosensitive elements D1b, D2b, D3b and D4b are added by adders 24, 25 and 26, and outputs from the adders 21, 22 and 26 are added by an adder 27. The subtractor 23 produces a tracking error signal S1' indicative of the difference betweeen the sum of the outputs from the photosensitive elements D1a and D4a and the sum of the outputs from the photosensitive elements D2a and D3a. The adder 27 produces the total sum of the outputs from the eight photosensitive elements D1a to D4a and D1b to D4b. An output from the subtractor 23 is supplied to sampling-hold circuits 17 and 18 identical to those shown in Figure 1. An output from the adder 27 is supplied to pulse generators 15 and 16 identical to those shown in Figure 1. Outputs from the sampling-hold circuits 17 and 18 are supplied to a differential circuit 19 identical to that shown in Figure 1. A tracking control signal is then produced by the same operation as that of the circuit of Figure 1, and is supplied to an output terminal 20. Therefore, the pulse generator 15, the pulse generator 16, the sampling-hold circuits 17 and 18, and the differential circuit 19 form a synthesizing circuit 28 for generating a tracking control signal based on the output from the subtractor 23 and the output from the adder 27.

The tracking error signal S1' from the subtractor 23 is produced on the basis of the outputs from the photosensitive elements D1a, D2a, D3a and D4a, that is, outputs indicative of the amounts of light only in the outer circumferential peripheral portion of the diffraction pattern formed on the exit pupil surface of the objective lens 7 by the reading light beam. As a consequence, any influence on the tracking error signal due to a recording medium tilt and a bit arrangement is greatly reduced, and the tracking error signal S1 suffers from no amplitude variation. In the above embodiment, all outputs from the eight photosensitive elements D1a to D4a and D1b to D4b are added to produce a reproduced information signal. Thus, the reading light beam can be utilized highly effectively for generating a reproduced information signal efficiently.

The detection of the quantities of light only in the outer circumferential peripheral portion of a diffraction pattern produced on the exit pupil surface of the objective lens by the reading light beam in the optical head control signal generator may be effected by other means than the foregoing arrangement in which the photosensitive unit is divided into a photosensitive element area for detecting the amounts of light in the outer circumferential portion of the diffraction pattern and a photosensitive element area for detecting the quantities of light in the central portion of the diffraction pattern.

Embodiments of optical head control signal generator according to the present invention are capable of generating a highly stable and accurate tracking control signal, and are therefore suitable for use, for example, in optical digital audio disc players (compact disc players), video disc players and optical disc memory players.

**Claims**

1. An optical head control signal generator comprising:
a lens (7) disposed in an optical path of a reading light beam which is caused by an optical head to be incident upon a recording medium (1) and modulated by the recording medium (1);
four photosensitive elements disposed respectively in first, second, third and fourth quadrants divided by two perpendicular straight lines and responsive to the reading light beam for producing detected outputs based on a diffraction pattern formed on an exit pupil surface of said lens (7) by the reading light beam; and
a synthesizing circuit (28) for producing a first sum output by adding the detected outputs from the two of said photosensitive elements located in said first and third quadrants and a second sum output by adding the detected outputs from the two of said photosensitive elements located in said second and fourth quadrants, and for generating a tracking error signal for controlling said optical head on the basis of sum and difference signal indicative of the sum of and the difference between siad first and second sum signals; characterised in that:
said detected outputs from said four photosensitive elements (D2a, D1a, D3a, D4a) are based only on an outer peripheral portion of said diffraction pattern.

2. A generator according to claim 1 wherein said detected outputs from said four photosensitive elements (D2a, D1a, D3a, D4a) are based only on an outer circumferential peripheral portion of said diffraction pattern.

3. A generator according to claim 1 or claim 2 comprising eight photosensitive elements (D2a, D2b; D1a, D1b; D3a, D3b; D4a, D4b) disposed in pairs in said first, second, third and fourth quadrants respectively, four of said photosensitive elements (D2b, D1b, D3b, D4b), one in each of said quadrants together forming a circular array of photosensitive elements symmetricaly disposed relative to said straight lines, and the remaining four of said photosensitive elements (D2a, D1a, D3a, D4a) being those from which said detected outputs are derived and together encircling said other four of said photosensitive elements (D2b, D1b, D3b, D4b).

**Patentansprüche**

1. Signalgenerator zur Steuerung eines optischen Kopfes mit einer Linse (7), die in dem optischen Weg eines Leselichtstrahls angeordnet ist, der über einen optischen Kopf auf ein Aufzeichnungsmedium (1) auftrifft und von diesem moduliert wird,
mit vier lichtempfindlichen Elementen, die in einem ersten, einem zweiten, einem dritten bzw. einem vierten, durch zwei zueinander senkrechte Geraden unterteilten Quadranten angeordnet sind und auf den Leselichtstrahl ansprechen, wobei sie Detektorausgangssignale erzeugen, die auf einem Beugungsmuster basieren, das von dem Leselichtstrahl in einer Austrittpupillenfläche der genannten Linse (7) erzeugt wird,
sowie mit einer Synthetisierschaltung (28) zur Erzeugung eines ersten Summenausgangssignals durch Addition der Detektorausgangssignale derjenigen beiden lichtempfindlichen Elemente, die in dem ersten und dem dritten Quadranten liegen, und eines zweiten Summenausgangssignals durch Addition der Detektorausgangssignale derjenigen beiden lichtempfindlichen Elemente, die in dem zweiten und dem vierten Quadranten liegen, und zur Erzeugung eines Spurfehlersignals für die Steuerung des optischen Kopfes auf der Basis von Summen-und Differenzsignalen, die für die summe bzw. die Differenz der genannten ersten und zweiten Summenausgangssignale kennzeichnend sind, dadurch gekennzeichnet,
Daß die Detektorausgangssignale der vier licktempfindlichten Elemente (D2a, D1a, D3a, D4a) nur auf einem äußeren peripheren Bereich des genannten Beugungsmusters basieren.

2. Generator nach Anspruch 1, bei dem die Detektorausgangssignale der vier lichtempfindlichen Elemente (D2a, D1a, D3a, D4a) nur auf einem äußeren peripheren Umfangsbereich des Beugungsmusters basieren.

3. Generator nach Anspruch 1 oder 2, mit acht lichtempfindlichen Elementen (D2a, D2b; D1a, D1b; D3a, D3b; D4a, D4b), die paarweise in dem ersten, dem zweiten, dem dritten bzw. dem vierten Quadranten angeordnet sind, wobei vier von diesen lichtempfindlichen Elementen (D2b, D1b, D3b, D4b), und zwar eines in jedem Quadranten, zusammen ein kreisringförmiges Feld von lichtempfindlichen Elementen bilden, die symmetrisch zu den genannten Geraden angeordnet sind, während die übrigen vier lichtempfindlichen Elemente (D2a, D1a, D3a, D4a) diejenigen sind, von denen die Detektorausgangssignale abgeleitet werden und die zusammen die anderen vier lichtempfindlichen Elemente ((D2b, D1b, D3b, D4b) umschließen.

**Revendications**

1. Générateur de signaux de commande de tête optique, comprenant:

une lentille (7) disposée dans un chemin optique d'un faisceau lumineux de lecture qu'une tête optique fait en sorte de rendre incident sur un support d'enregistrement (1) et qui est modulé par le support d'enregistrement (1);

quatre éléments photosensibles disposés respectivement dans des premier, deuxième, troisème et quatrième quadrants divisés par deux lignes droites perpendiculaires et réagissant au faisceau lumineux de lecture pour produire des signalus détectés de sortie basés sur une figure de diffraction formée sur une surface de pupille de sortie de l'objectif (7) par le faisceau lumineux de lecture; et

un circuit systhétiseur (28) produire un premier signal de somme de sgrtie en additionnant les signaux de sortie détectés par les deux éléments parmi les éléments photosensibles placés dans les premier et troisième quadrants et un deuxième signal de somme desortie en additionnant les signaux détectés de sortie des deux éléments parmi les éléments photosensibles placés dans les deuxième et quatrième quadrants, et pour engendrer un signal d'erreur d'alignement afin de commander la tête optique en fonction des signalux de somme et de différence indiquant la somme et la différence entre les premier et deuxième signaux de somme; caractérisé en ce que:

les signaux détectés de sortie des quatre éléments photosensibles (D2a, D1a, D3a, D4a) ne sont basés que sur une partie périphérique extérieure de la figure de diffraction.

2. Générateur selon la revendication 1, dans lequel les signaux détectés de sorties des quatre éléments photosensibles (D2a, D1a, D3a, D4a) ne sont basés que sur une partie périphérique circonférentielle extérieure de la figure de diffraction.

3. Générateur selon l'une quelconque des revendications 1 et 2, comprenant huit éléments photosensibles (D2a, D2b; D1a, D1b; D3a, D3b; D4a, D4b) disposés en paires respectivement dans les premier, deuxième, troisième et quatrième quadrants, quatre des éléments photsensibles (D2b, D1b, D3b, D4b) dont un dans chacun des quadrants constituant ensemble une surface circulaire d'éléments photosensibles disposés symétriquement par rapport aus lignes droites, et les quatre éléments photosensibles restants (D2a, D1a, D3a, D4a) étant ceux à partir desquels les signaux détectés de sortie sont dérivés et encerclant ensemble les quatre autre éléments photosensibles (D2b, D1b, D3b, D4b).

FIG. 1

FIG. 2

FIG. 3A          FIG. 3B          FIG. 3C

1

FIG. 4

FIG. 5A

FIG. 5B

FIG. 5C

FIG. 5D

FIG. 5E

FIG. 5F

FIG. 6

$t_\beta$   $t_\alpha$   $t_\gamma$

FIG. 7A

$W = 0$
$r = 0$

FIG. 7B

$W = \theta \neq 0$
$r = 0$

FIG. 7C

$W = 0$
$r = \dfrac{T}{2}$

3

FIG. 8A

FIG. 8B

FIG. 8C

FIG. 8D

FIG. 9

FIG. 10